# EUROPEAN PATENT APPLICATION

(11) **EP 3 741 208 A1**
(43) Date of publication of application: **25.11.2020**
(21) Application number: 19740891.7
(22) Date of filing: 15.01.2019
(51) Int. Cl.: A01K 23/00, A01K 1/01

(54) **TOILET FOR PETS**

(30) Priority: 16.01.2018 JP 2018005145
(71) Applicant: Tohara, Hirotaka, Matsuyama-shi Ehime 791-1103 (JP)
(72) Inventor: Tohara, Hirotaka, Matsuyama-shi Ehime 791-1103 (JP)
(74) Representative: dompatent von Kreisler Selting Werner - Partnerschaft von Patent- und Rechtsanwälten mbB
(86) International application number: PCT/JP2019/000946
(87) International publication number: WO 2019/142789

(57) **Abstract**

The present invention provides a pet toilet which can suppress breakage of a sheet and can be easily replaced and can be used comfortably by an owner.

A pet toilet comprising: a strip-shaped processing sheet for processing excrement of pet; an unwinding roller for unwinding the processing sheet; a pedestal on which the processing sheet is laid; a excrement collecting unit for collecting the excrement;
wherein the excrement collecting section including: a winding roller for collecting urine; a feces collecting section for collecting feces.

## Description

### Technical Field

The present invention relates to a coiled pet toilet.

### Background Art

Conventionally, when processing excrement of pets such as dogs and cats for indoor use, a predetermined container (toilet bowl) in which a processing sheet such as a newspaper or cloth is laid in advance has been used.

The owner disciplines the pet to allow the pet to excrete inside the container (toilet bowl) and prevent the floor surface from being contaminated, and when excreta such as feces and urine is excreted inside the container (toilet bowl), the owner discard the excreta collectively together with the treated sheet, and then replace with a new treated sheet.

However, for the owner, such a work is unsanitary and labor-intensive.

In order to solve such a problem, Patent Document 1 describes a pet toilet capable of efficiently and hygienically treating manure after excretion of a pet and a processing sheet used therefor.

In addition, Patent Document 2 describes a pet toilet which can easily perform a replenishment operation of a processing sheet and which can replenish a novel processing sheet even in a state where a processing sheet remains and can be continuously used.

### Citation List

### Patent Literature

Patent Literature 1: Japanese Unexamined Patent Application Publication No. 2002-34373
Patent Literature 2: Japanese Patent No. 4388913

### Summary of Invention

### Technical Problem

However, the pet toilet described in Patent Document 1 has a problem in that, because of a configuration in which the processing sheet is manually pulled out, for example, when the owner keeps the house, the processing sheet after excretion cannot be replaced, and the excretion on the processing sheet is left for a long time, so that the malodor drifts.

Further, in the pet toilet described in Patent Document 2, since the feces are wound and collected in a form of being crushed between the processing sheets, there is a fear that the feces are not crushed by the hardness of those and the processing sheet is broken. In addition, since feces and urine are wound around one place and collected, the weight of the processing sheet after use tends to increase, labor at the time of replacement increases, and there is a concern that strong malodor may occur.

It is an object of the present invention to provide a pet toilet capable of suppressing breakage of a processing sheet and easily replacing the processing sheet, and allowing the owner to comfortably use the pet toilet.

### Solution to Problem

The pet toilet of the present invention, in order to solve the problems described above,

A pet toilet comprising: a strip-shaped processing sheet for processing excrement of pet; an unwinding roller for unwinding the processing sheet; a pedestal on which the processing sheet is laid; a excrement collecting unit for collecting the excrement;
wherein the excrement collecting section including: a winding roller for collecting urine; a feces collecting section for collecting feces.

According to the present invention, since the feces are not wound around the winding roller but collected in the feces collecting section, it is possible to suppress breakage of the treated sheet. In addition, since the weight of the processing sheet after use is hardly increased, it is possible to easily replace the processing sheet. Furthermore, since the feces and the urine are collected separately, it is possible to suppress the generation of malodor.

According to a preferred embodiment of the present invention, the feces collecting portion is provided with a blade in contact with the processing sheet in a width direction.

With such a configuration, even if, for example, the amount of moisture is large and the feces are adsorbed to the processing sheet, the feces can be peeled off from the processing sheet without being touched by hand and can be accommodated in the feces collecting portion.

According to a preferred embodiment of the present invention, the feces collecting portion is substantially transparent.

With such a configuration, it is possible to easily visually recognize the presence or absence of the feces inside the feces collecting section from the outside.

According to a preferred embodiment of the present invention, a pet toilet comprising: a housing for accommodating the unwinding roller and the winding roller in the same space.

With such a configuration, since it is possible to compact the entire pet toilet, it is possible to improve ease of handling and the degree of freedom of installation position.

According to a preferred embodiment of the present invention, the housing including; a side wall portion erected substantially parallel to the width direction of the processing sheet and substantially perpendicular to the pedestal,
wherein the above of the side wall portion is provided with an insertion opening through which the processing sheet is inserted.

With such a configuration, the processing sheet can be mounted so as to cover the side wall portion. This makes it possible to collect the urine of the pet, which has a habit of urinating towards the wall, by being received by the treated sheet.

According to a preferred embodiment of the present invention, the housing is formed with an opening for taking in and out the winding roller and the winding roller.

With such a configuration, it is possible to quickly replace the processing sheet with a simple operation.

According to a preferred embodiment of the present invention, the pedestal is detachably attachable to the side wall portion.

With such a configuration, it is possible to easily mount the processing sheet on the pedestal and clean the pedestal.

According to a preferred embodiment of the present invention, a pet toilet comprising: a pressure sensing sensor for sensing the presence or absence of excrement by the weight loaded on the pedestal.

With such a configuration, even when the pet is left for a long time, (for example, even when the owner is away from the house) the excrement can be automatically collected in the excrement collecting unit.

According to a preferred embodiment of the present invention, a pet toilet comprising: a reading sensor for reading the length of the processing sheet taken up by the winding roller.

With such a configuration, it is possible to prevent wasteful use of the processing sheet.

According to a preferred embodiment of the present invention, a pet toilet comprising: a notification means for reporting a replacement time of the processing sheet.

With such a configuration, the owner can immediately visually confirm the necessity of replacement without checking the state of the processing sheet.

According to a preferred embodiment of the present invention, the feces collection portion is provided with a medicine storage portion.

With such a configuration, it is possible to keep the inside of the feces collecting section odorless and clean.

### Advantageous Effects of Invention

According to the present invention, it is possible to provide a pet toilet which can suppress the breakage of the sheet and can be easily replaced, and which can be used comfortably by the owner.

### Brief Description of Drawings

Fig 1 is a schematic perspective view of the pet toilet according to an embodiment of the present invention.
Fig 2 is a cross-sectional view taken along line A-A of the pet toilet according to an embodiment of the present invention.
Fig 3 is a top view of the pet toilet according to an embodiment of the present invention.
Fig 4 is a schematic perspective view of the feces collection unit and the front frame in a pet toilet according to an embodiment of the present invention.
Fig 5 is a schematic perspective view of the processing sheet, a winding roller and a unwinding roller in the pet toilet according to an embodiment of the present invention.
Fig 6 is an assembly explanatory view in the pet toilet according to an embodiment of the present invention.
Fig 7 is an explanatory view of the mounting procedure of the processing sheet in the pet toilet according to an embodiment of the present invention.
Fig 8 is an explanatory view of a method of use in the pet toilet according to an embodiment of the present invention.
Fig 9 is an explanatory view of a method of use in the pet toilet according to an embodiment of the present invention.
Fig 10 is a schematic perspective view showing an example of change of the feces recovery unit in the pet toilet according to an embodiment of the present invention.

### Description of Embodiments

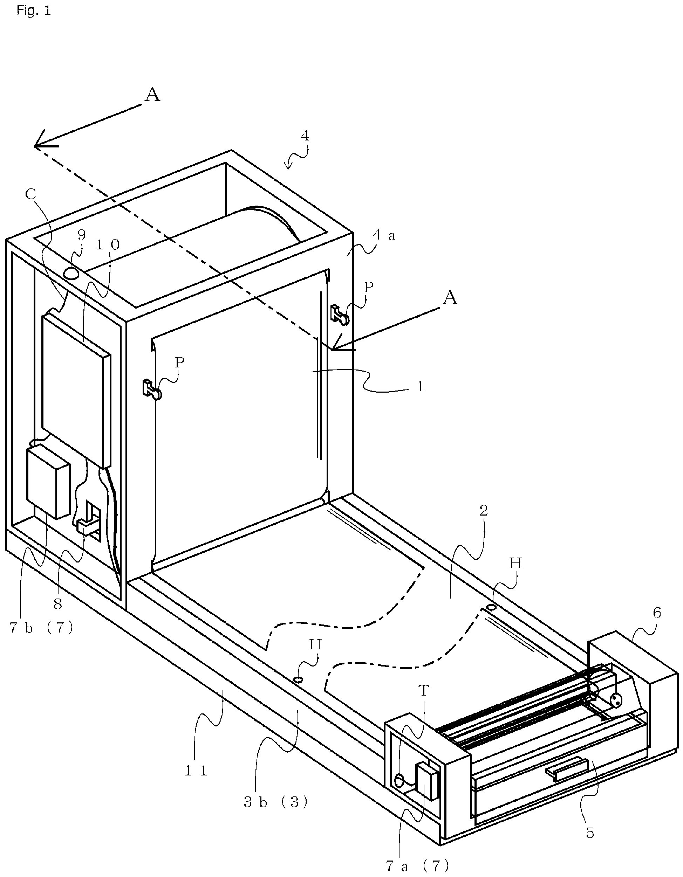

Hereinafter, a pet toilet according to an embodiment of the present invention will be described with reference to Figs 1 to 10. Note that the embodiment described below is an example of the present invention, and the present invention is not limited to the following embodiments.

As shown in Fig 1, the pet toilet according to the embodiment of the present invention comprises a processing sheet 1, a substantially rectangular plate-shaped pedestal 2 on which the processing sheet 1 is laid, a center frame 3 on which the pedestal 2 is placed, a substantially rectangular parallelepiped-shaped housing 4 in which the processing sheet 1 is stored, a feces collecting portion 5, a front frame 6 on which the feces collecting portion 5 is placed, a motor unit 7, a reading sensor 8, a light emitting unit 9, a control unit 10, and a base 11.

As a material of the processing sheet 1, a material having water absorption, such as a papermaking material, is suitably used.

As a material of the base 2, the housing 4, and the base 11, wood is suitably used, but various materials such as metal and synthetic resin can be naturally applied.

As a material of the center frame 3 and the front frame 6, a metal or a synthetic resin is suitably used.

As a material of the feces recovery portion 5, a synthetic resin is suitably used.

For convenience of clarifying the boundary between the processing sheet 1 and the pedestal 2, the processing sheet 1 is virtually cut off by a dashed line on the upper surface of the pedestal 2.

For convenience of description below, the A-A line direction shown in Fig 1 is taken as the front-rear direction, and the direction orthogonal to the front-rear direction in a plane parallel to the base 11 is taken as the left-right direction. Furthermore, in the front-rear direction, the side of the feces collecting portion 5 is referred to as the front, and the side of the housing 4 is referred to as the rear. In the left-right direction, the side on which the motor unit 7, the reading sensor 8, the light emitter 9 and the control unit 10 are provided is referred to as the left side, and the side facing the left side is referred to as the right side.

The upper surface of the pedestal 2, at intervals in the left-right direction, and so as not to overlap the processing sheet 1, a pair of locking holes H are provided. Further, the housing 4 includes a side wall portion 4a that is erected substantially parallel to the width direction of the processing sheet 1 and substantially perpendicular to the base 2, the upper portion of the side wall portion 4a, at intervals in the left-right direction, a pair of locking projections P to be inserted into the locking hole H is provided.

With such a configuration, by rotating the pedestal 2 toward the housing 4 side around the rear short side as an axis, with the pair of locking holes H and the pair of locking projections P, the housing 4 can be locked while being substantially perpendicular to the base 11.

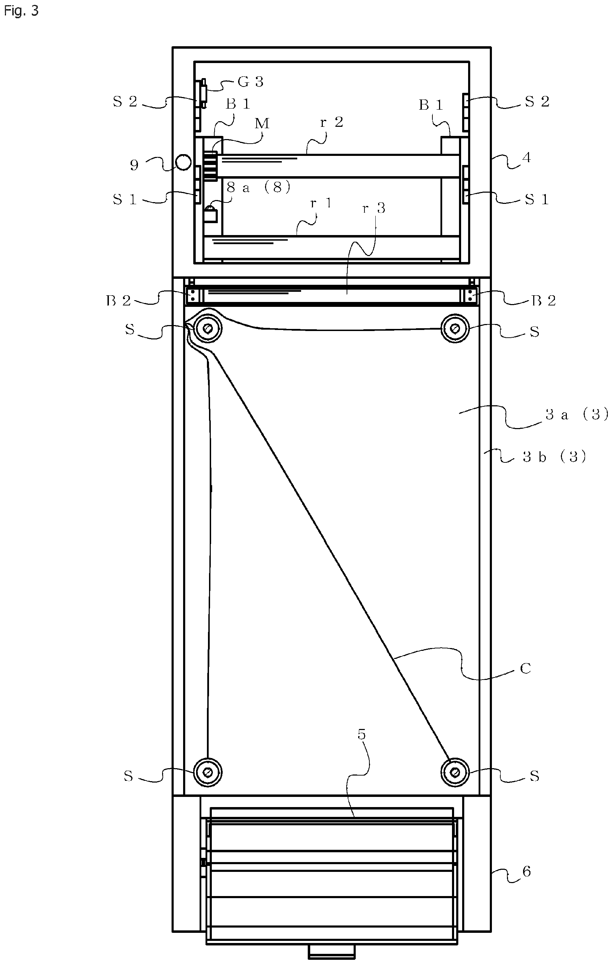

The center frame 3 includes a base portion 3a (see Fig 3), and an erected portion 3b erected on the left and right ends of the base portion 3a.

The motor section 7 includes a first motor 7a for opening and closing the feces collecting portion 5, and a second motor 7b for unwinding and winding the processing sheets 1.

The motor unit 7, the read sensor 8 and the light emitter 9, via a connection cable C, is electrically connected to the control unit 10.

Incidentally, the connecting cable C which is connected to the first motor 7a is connected to the control unit 10 by being inserted into a through hole T penetrating the front side surface of the erected portion 3b and the housing 4 in the front-rear direction and being drawn out near the left side surface of the housing 4.

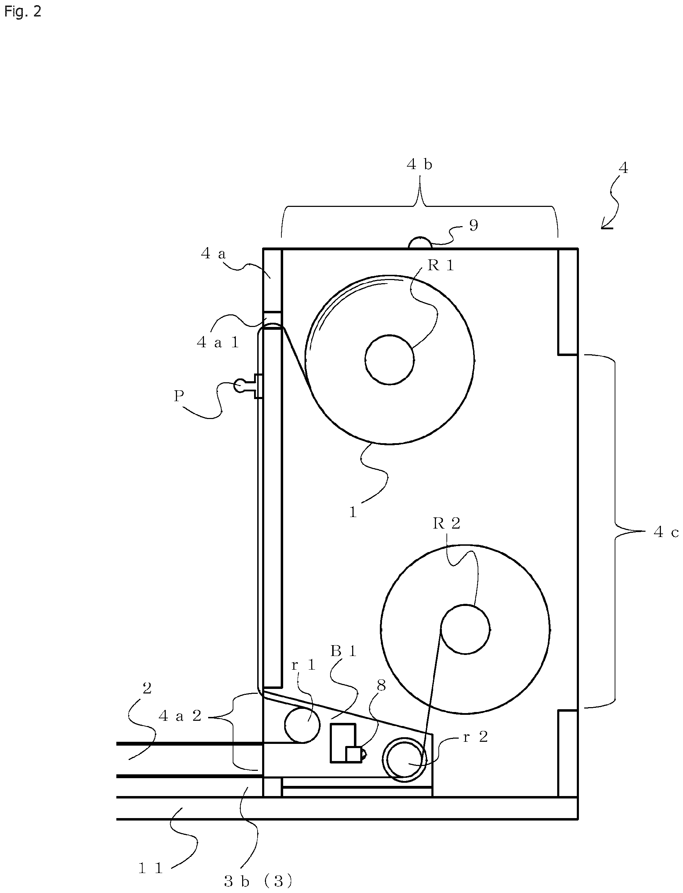

As shown in Fig 2, the housing 4 includes a side wall portion 4a, an open port 4b formed on the upper surface, and an open port 4c formed on the side surface facing the side wall portion 4a.

The side wall portion 4a is provided with an upper insertion port 4a1 and a lower insertion port 4a2 through which the processing sheets 1 are inserted.

Inside the housing 4, there are provided a winding roller R1 around which the processing sheet 1 before use is wound, and a winding roller R2 for winding up the processing sheet 1 after use. Further, the elongated cylindrical first auxiliary roller r1 and the second auxiliary roller r2 for properly holding the tension of the processing sheet 1 and smoothly performing the winding operation are rotatably provided near the lower insertion opening 4a2 by the pair of first brackets B1.

Fig 3 is a top view of the pet toilet according to the present embodiment in a state in which the pedestal 2 is locked to the housing 4 using the locking hole H and the locking projection P. For convenience of description, the processing sheet 1, the unwinding roller R1, and the winding roller R2 are omitted.

As shown in Fig 3, in the center frame 3, the upper surface of the base portion 3a, the pressure sensitive sensor S is provided at the four corners, the pressure sensitive sensor S, via a connecting cable C, is electrically connected to the control unit 10.

Incidentally, the connecting cable C which is connected to the pressure sensitive sensors S is provided on the inner surface of the left upright portion 3b. Further the connecting cable C is connected to the control unit 10 by inserted into a small hole (not shown) communicating with the through hole T, and pulled out to the vicinity of the left side surface of the housing 4.

Each of the pressure-sensitive sensors S senses the movement of a pet such as a dog or a cat on or off the pedestal 2.

Specifically, each pressure-sensitive sensor S detects a moment when a predetermined weight is loaded on the pedestal 2 (a moment when a pet rides on the pedestal 2), and then a predetermined time elapses, and a moment when this weight is unloaded (a moment when the pet descends from the pedestal 2), it sends a signal to the control unit 10.

Incidentally, since each pressure sensitive sensor S detects a moment when the weight is unloaded and transmits a signal, when the pet is lying on the upper surface of the pedestal 2, the signal is not transmitted. Further, by setting the above-mentioned predetermined time to, for example, about several tens of seconds, it is possible to adopt a configuration in which a signal is not transmitted when the pet has passed the upper surface of the pedestal 2 for a moment.

On one short side end surface of the pedestal 2, an elongated cylindrical third auxiliary roller r3 for smoothly performing the winding operation is rotatably provided by the pair of second bracket B2.

At the left end of the second auxiliary roller r2, a plurality reading mark M provided over the entire circumference of the second auxiliary roller r2 at a constant interval. Then, the reading sensor 8 is protruded from the left side outer surface of the housing 4 on the left side surface inside of the housing 4, the reading unit 8a is configured to face the left end of the second auxiliary roller r2.

With such a configuration, the reading sensor 8 can read the reading marks M provided at the left end of the second auxiliary roller r2 by the reading unit 8a, and can read the length of the processing sheet 1 that has been pulled out.

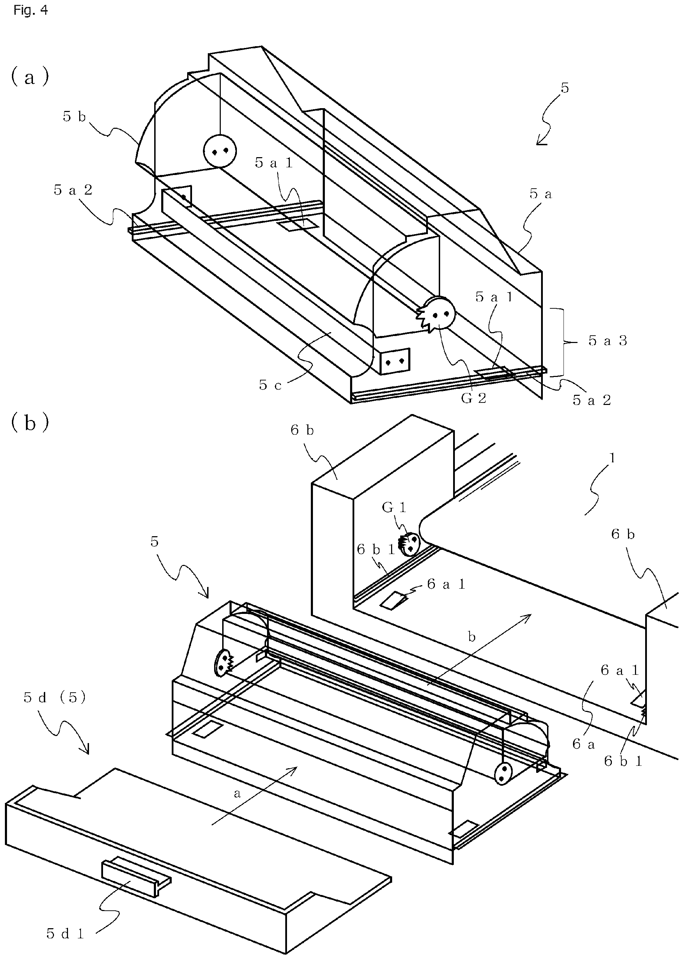

Fig 4(a) is a schematic perspective view of the feces collecting portion 5 as viewed from the left rear, and Fig 4(b) is a schematic perspective view of the feces collecting portion 5 and the front frame 6 as viewed from the right front.

As shown in Figs 4(a) and 4(b), the feces collecting portion 5 includes a main body 5a, a door 5b, a blade 5c for separating the feces D discharged to the processing sheet 1 from the processing sheet 1, and collecting tray 5d.

In Fig 4(a), the collecting tray 5d are omitted for convenience of explanation.

The main body portion 5a is configured to be substantially transparent as a whole. Further, on the bottom surface, a pair of locking holes 5a1 are provided at intervals in the left-right direction for holding the mounting position with respect to the front frame 6 and particularly for preventing movement in the front-back direction. In addition, on both left and right side surfaces, a pair of ridges 5a2 is provided for holding the mounting position with respect to the front frame 6 and particularly for preventing movement in the vertical direction. Further, an opening 5a3 through which the collecting tray 5d is inserted is provided in the front.

The entire door portion 5b is configured to be substantially transparent, and the door portion 5b is installed on both left and right side surfaces of the main body portion 5a. Further, on the left side surface of the door portion 5b, the gear G2 configured to mesh with the gear G1 attached to the first motor 7a to be described later is secured through the left side surface of the main body portion 5a.

Blade 5c is installed in the lower portion of the left and right side surfaces of the main body portion 5a.

The collection tray 5d is provided with a handle portion 5d1 for easily inserting and removing the collection tray from the main body portion 5a.

Front frame 6 has a base portion 6a, and an erected portion 6b erected on the left and right ends of the base portion 6a.

On the upper surface of the base portion 6a, a pair of locking tongue 6a1 to be locked to the pair of locking hole 5a1 are provided at intervals in the lateral direction.

A pair of locking grooves 6b2 into which a pair of protrusions 5a2 are fitted are provided on opposite side surfaces of the erected portion 6b. Further, on the side surface of the left erected portion 6b where the locking groove 6b2 is provided, the gear G1 attached to the first motor 7a is exposed. Further, the gear G1 rotates in synchronization with the rotation of the first motor 7a.

With this configuration, the rotation of the first motor 7a is transmitted to the door portion 5b through the gear G1 and the gear G2, and opening and closing of the door portion 5b is performed in synchronization with the rotation of the first motor 7a.

As shown in Fig 4(b), the collecting tray 5d is inserted through the opening 5a3, and is thus attached to the main body portion 5a so as to be freely pulled out (see arrow a). In addition, by sliding the feces collecting portion 5 so that the pair of projections 5a2 are fitted into the pair of locking grooves 6b2, the gear G1 and the gear G2 are engaged with each other, and the pair of locking tongues 6a1 are locked to the pair of locking holes 5a1 (see arrow b). By doing so, the placing position of the feces collecting portion 5 with respect to the front frame 6 is maintained.

It should be noted that while the placing position is held, the collecting tray 5d is removed from the feces collecting portion 5, the pair of locking tongues 6a1 is pushed down, and the main body portion 5a is slid forward, whereby the feces collecting portion 5 can be easily removed from the front frame 6. This makes it possible to easily clean the feces collecting portion 5.

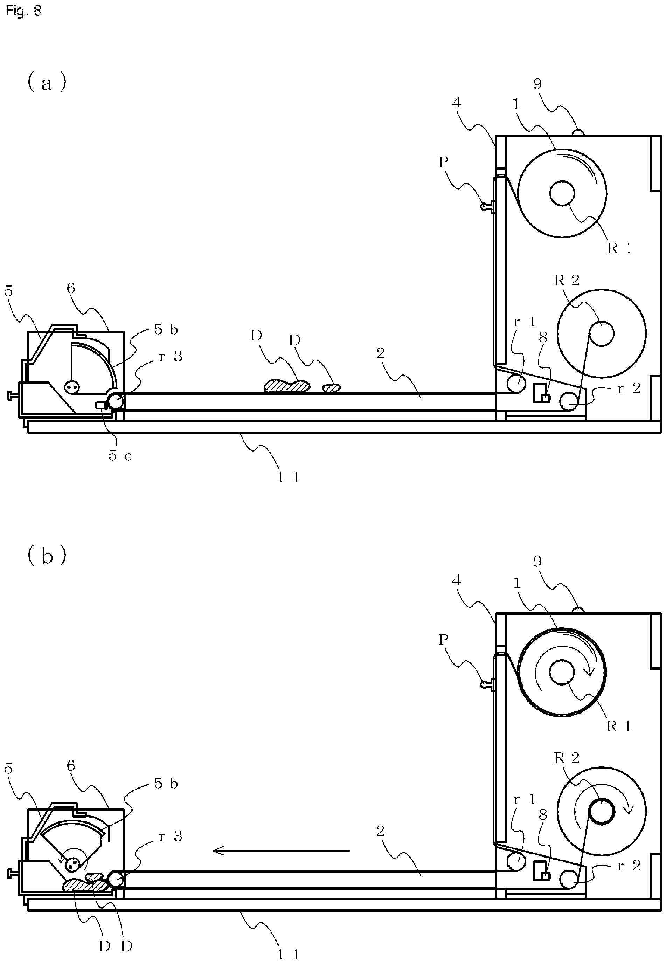

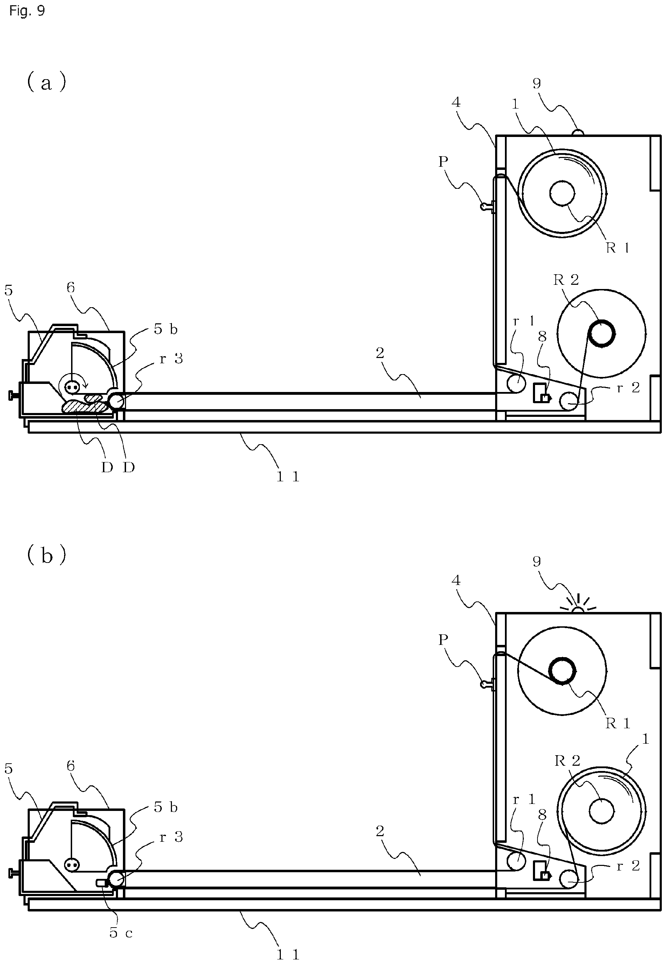

As described above, by assembling the respective members, the feces collecting portion 5 and the front frame 6 are brought into a state as shown in Fig 1. The blade 5c is in contact with the processing sheet 1 in the widthwise direction, as shown in Figs 8 and 9.

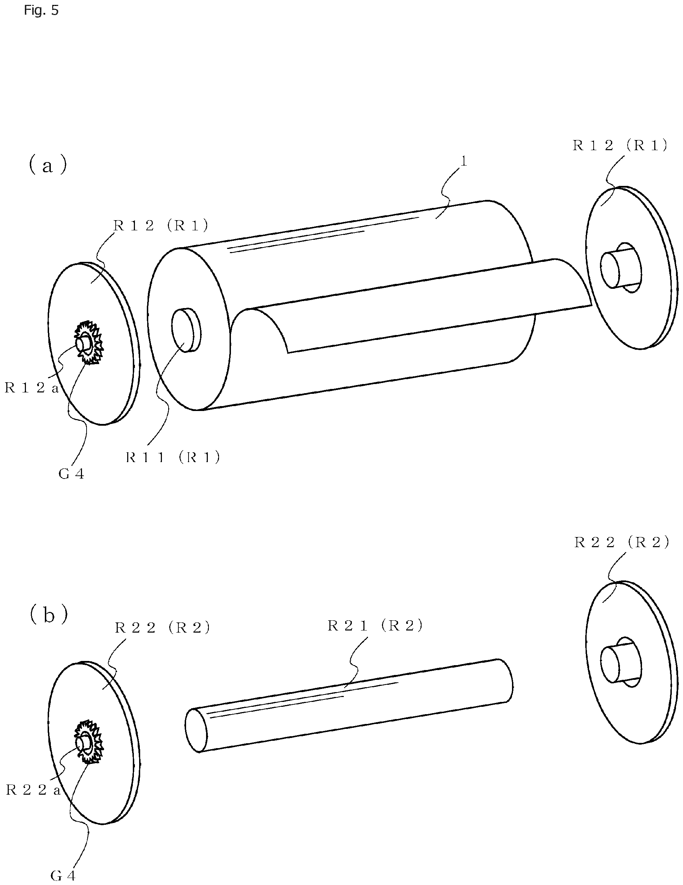

Fig 5 is an exploded perspective view of the unwinding roller R1 on which the processing sheet 1 is wound and the winding roller R2 before the processing sheet 1 is wound, as seen from the left front side.

As shown in Fig 5(a), the unwinding roller R1 includes a cylindrical body R11 and a pair of caps R12 having a substantially disk shape attached to both ends of the cylindrical body R11.

The pair of caps R12 are provided with a cylindrical projection R12a for mounting on a pair of support members S1 described later. Further, on the left cap R22, a gear G4 configured to mesh with a gear G3 attached to a second motor 7b, which will be described later, is fixed to the cylindrical protrusion R22a substantially coaxially.

As shown in Fig 5 (b), the winding roller R2 includes a cylindrical body R21, a pair of caps R22 substantially disk-shaped attached to both ends of the cylindrical body R21, similarly to the unwinding roller R1.

Similar to the unwinding roller R1, the pair of caps R22 are provided with a cylindrical projection R22a for mounting on a pair of support members S2 described later. On the left cap R22, a gear G4 configured to mesh with a gear G3 attached to a second motor 7b, which will be described later, is fixed to the cylindrical protrusion R22a substantially coaxially.

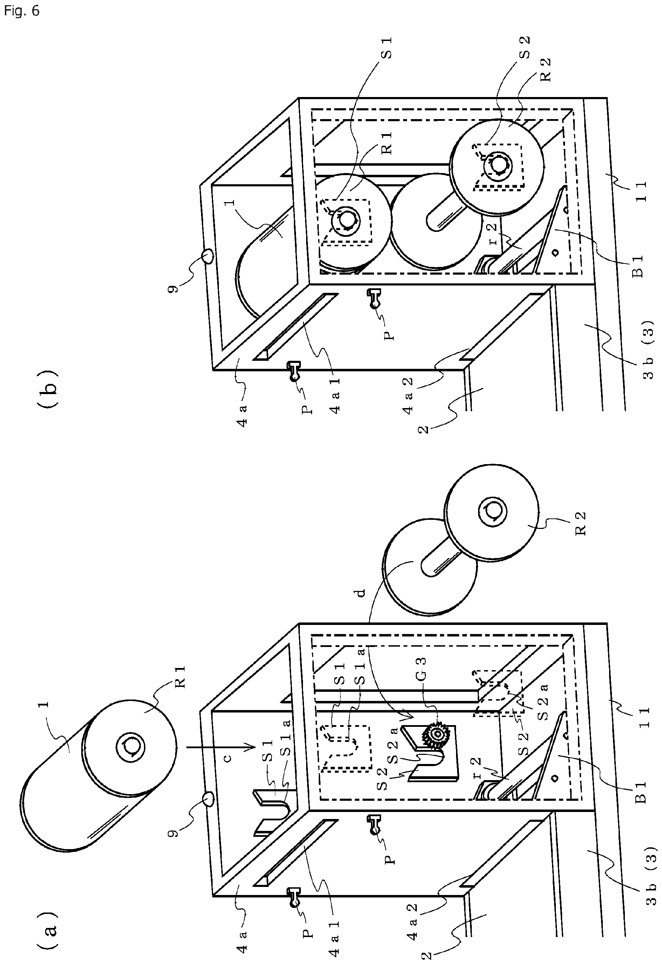

Fig 6 is a schematic perspective view of the pedestal 2 and the housing 4 as seen from the right front side.

For convenience of description, the right side surface of the housing is virtually cut off by a dashed line.

As shown in Fig 6(a), a pair of support members S1 and S2 for supporting the unwinding roller R1 and the winding roller R2 are provided on the inner sides of the left and right side surfaces of the housing 4 (the support members S1 and S2 provided on the inner side of the right side surface are indicated by dotted lines).

More specifically, mounting grooves S1a and S2a are formed in the pair of support members S1 and S2, and the tubular projections R12a and R22a of the unwinding roller R1 and the winding roller R2 are mounted on the mounting grooves S1a and S2a, whereby the unwinding roller R1 and the winding roller R2 are rotatably supported.

In the pair of support members S2, the support member S2 provided on the left side surface, the gear G3 fixed to the second motor 7b is exposed. Further, the gear G3 rotates in synchronization with the rotation of the second motor 7b.

With this configuration, the rotation of the second motor 7b is transmitted to the winding roller R2 through the gear G3 and the gear G4, in synchronization with the rotation of the second motor 7b, the winding operation of the processing sheet 1 is performed.

In Fig 6 (a), the unwinding roller R1 around which the processing sheet 1 is wound is inserted into the open port 4b of the housing 4, and placed on a pair of support members S1 (see arrow c). the winding roller R2 is inserted into the open port 4c of the housing 4, so that the gear G3 and the gear G4 is engaged, and placed the pair of support members S2 (see arrow d). As a result, the state shown in Fig 6(b) is obtained.

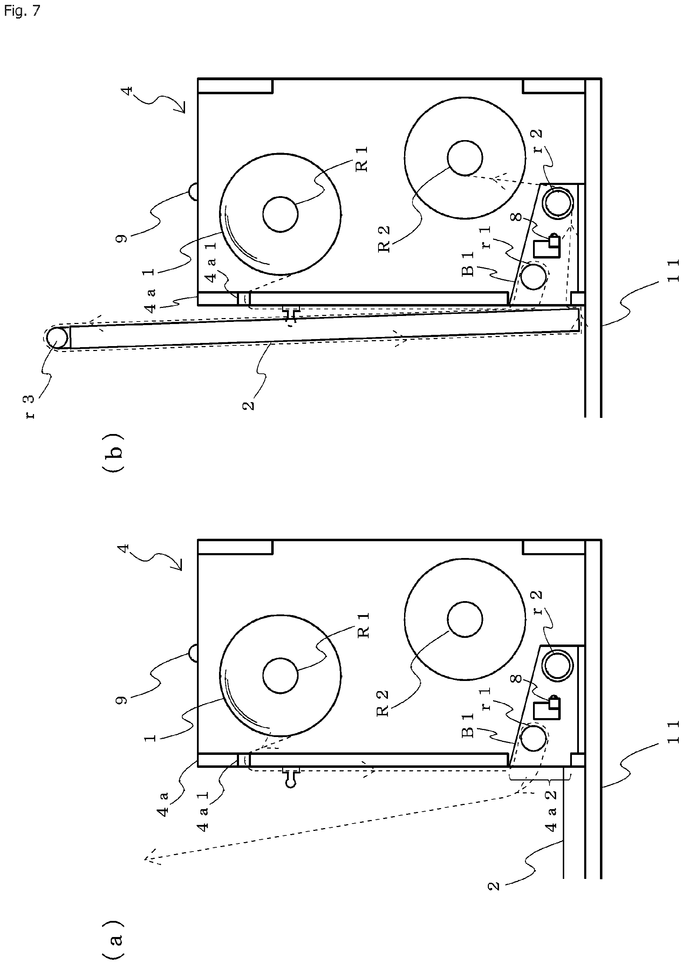

Hereinafter, a procedure of mounting the processing sheet 1 in the pet toilet according to the present embodiment will be described with reference to Fig 7.

Fig 7 is a cross-sectional view taken along line A-A of the pet toilet according to the present embodiment.

First, as shown by the dotted line in Fig 7 (a), the processing sheet 1 wound on the unwinding roller R1, is inserted into the upper insertion port 4a1, drawn downward so as to cover the side surface of the front side of the housing 4, and then inserted into the lower insertion port 4a2. Next, the processing sheet 1 pulled out in this manner is engaged with the first assisting roller r1, and the processing sheet 1 is inserted into the lower insertion port 4a2 again.

Here, after the mounting as shown by the dotted line in Fig 7 (a) is completed, the pedestal 2, using the locking hole H and the locking projection P, to be locked to the housing 4.

Next, as shown by the dotted line in Fig 7 (b), the processing sheet 1, after pulled out so as to cover from above on the pedestal 2, is inserted into the lower insertion port 4a2 from below the pedestal 2. Next, the processing sheet 1 thus drawn out is drawn out so as to pass between the second auxiliary roller r2 and the bottom surface of the housing 4, and adhered to the winding roller R2.

As described above, after the processing sheet 1 is mounted, the pedestal 2 is removed from the housing 4 and put back on the center frame 3, whereby the state shown in Fig 1 is obtained.

In a state as shown in Fig 1, The rotation axes of the unwinding roller R1, the winding roller R2, the first auxiliary roller r1, the second auxiliary roller r2 and the third auxiliary roller r3 are all parallel to each other.

Hereinafter, a method of using the pet toilet according to the present embodiment will be described with reference to Figs 8 and 9.

Figs 8 and 9 are cross-sectional views when the entire pet toilet according to the present embodiment is cut along the front-rear direction and viewed from the right.

First, a pet (not shown) performs a series of motions which riding on the pedestal 2 on which the processing sheet 1 is laid, excreting feces D and urine (not shown), and then descending from the pedestal 2 (the state of Fig 8(a)). Upon receiving these motions, the pressure sensor S sends to the control unit 10 a signal for starting the rotation operation of the winding roller R2 and a signal for opening the feces collecting portion 5.

As a result, the winding roller R2 is rotated backward by the second motor 7b, and the treated sheet 1 is wound by the winding roller R2, whereby feces D and urine (not shown) move forward. Simultaneously with the rotation of the winding roller R2, the door portion 5b is rotated forward by the first motor 7a, and the feces collecting portion 5 is opened. Therefore, the feces D moved forward finally fall to the collecting trays 5d (Fig 8(b)). At this time, even when, for example, the moisture content of the feces D are large and is adsorbed on the treatment sheet 1, the feces D are peeled from the processing sheet 1 by the blade 5c and fall into the collecting tray 5d

Further, the urine that has soaked in the processing sheet 1 passes through the bottom surface of the pedestal 2 by further rotation of the winding roller R2, and is wound around the winding roller R2 to be collected.

Next, when the read sensor 8 detects that the processing sheet 1 is wound around the winding roller R2 for a predetermined length through the read mark M, it transmits a signal to stop the rotation operation of the winding roller R2 to the control unit 10 and a signal to close the feces collecting portion 5.

Thus, the rotation of the second motor 7b is stopped, the rotation operation of the winding roller R2 is stopped. Further, the door portion 5b is rotated backward by the first motor 7a, and the feces collecting portion 5 is closed (the state of Fig 9(a)).

By repeating the series of operations described above, the feces D accumulates inside the feces collecting portion 5. For this reason, the owner appropriately pulls out the collecting trays 5d from the main body portion 5a and processes the feces D to empty the inside of the feces collecting portion 5.

Further, by repeating the series of operations described above, most of the processing sheet 1 wound around the unwinding roller R1 is wound around the winding roller R2. At this time, the reading sensor 8 reads the total length of the processing sheet 1 wound around the winding roller R2 via the reading mark M, and reads the state immediately before the processing sheet 1 is used up. The reading sensor 8 that has read this state transmits a signal to the control unit 10 to turn on the light emitter 9.

Thus, by the light emitter 9 is turned on, the owner is notified that it is necessary to replace the processing sheet 1 (the state of Fig 9 (b))

The processing sheet 1 is replaced by the following procedure.

First, the processing sheet 1 after use is cut at an arbitrary position such as the upper surface of the pedestal 2, remove the cut end of the processing sheet 1 after use from the unwinding roller R1. By doing so, the processing sheet 1 after use is in a state in which it is not wound around the unwinding roller R1 at all.

Next, the winding roller R2 which the used processing sheet 1 is wound is taken out to the outside via the opening 4c and discarded while removing the pair of caps R22, and then the unwinding roller R1 is placed on the pair of support members S2 as the gear G3 and the gear G4 is engaged,.

Next, a pair of caps R22 is attached to another unwinding roller R1 on which the processing sheet 1 before use is wound, and after being placed on the pair of support members S1 through the opening 4b, one end side of the cut end and the start end side of the processing sheet 1 before use are connected by an adhesive unit such as a tape.

Next, the processing sheet 1 before use is mounted on the pedestal 2 in the procedure shown in Fig 7, and the other end side of the cut end connected to the processing sheet 1 before use is connected to the unwinding roller R1 mounted on the pair of support members S2 by an adhesive means such as a tape.

By doing so, the processing sheet 1 is replaced, and the state shown in Fig 1 can be set again.

According to the present embodiment, since the winding roller R2 that collects urine (not shown) and the feces collecting portion 5 that collects feces D are provided as the feces collecting unit that collects the feces, the feces D is not wound around the winding roller R2 but collected in the feces collecting portion 5, and therefore, it is possible to suppress the breakage of the processing sheet 1. In addition, since the weight of the processing sheet 1 after use is hardly increased, it is possible to easily replace the processing sheet 1. Furthermore, since the feces D and the urine (not shown) are collected separately, it is possible to suppress the generation of malodor.

In addition, since the feces collection portion 5 includes a blade 5c in contact with the processing sheet 1 in the width direction, for example, even a feces D having a large amount of moisture and adsorbing to the processing sheet 1 can be peeled from the processing sheet 1 without being touched by a hand and stored in the feces collecting portion 5

In addition, since the feces collecting portion 5 is substantially transparent, the presence or absence of the feces D in the feces collecting portion 5 can be easily visually recognized from the outside.

In addition, by providing the housing 4 for accommodating the unwinding roller R1 and the winding roller R2 in the same space, it is possible to compact the entire pet toilet according to the present embodiment, it is possible to improve ease of handling and the degree of freedom of installation position.

In addition, since the housing 4 includes a side wall portion 4a that is erected substantially parallel to the width direction of the processing sheet 1 and substantially perpendicular to the base 2, and the side wall portion 4a is provided with an upper insertion port 4a1 through which the processing sheets 1 are inserted, it is possible to mount the processing sheet 1 so as to cover the side wall portion 4a. As a result, it is possible to collect the urine of the pet having a habit of urinating toward the wall by being received by the processing sheet 1.

In addition, since the housing 4 is formed with the opening ports 4b and 4c for taking in and out the unwinding roller R1 and the winding roller R2, the replacement of the processing sheet 1 can be performed quickly in a simple operation.

In addition, since the pedestal 2 is detachable with respect to the side wall portion 4a, it is possible to easily perform the cleaning of the mounting and pedestal 2 to the pedestal 2 of the process sheet 1.

In addition, since providing the pressure sensor S for sensing the presence or absence of excrement based on the weight loaded on the pedestal 2, even when the pet is left for a long time, (for example, even when the owner is away from the house) the excrement can be automatically collected in the excrement collecting portion 5.

In addition, since providing the reading sensor 8 on the left side surface of the housing 4, which reads the length of the processing sheet 1 wound around the winding roller R2, it is possible to prevent wasteful use of the processing sheet 1.

In addition, since providing the light emitter 9 as the notification means for notifying the replacement timing of the processing sheet 1, the owner can immediately visually recognize the necessity of replacement without checking the state of the processing sheet 1.

It should be noted that the shapes, dimensions, and the like of the constituent members described in the above embodiment are examples, and can be variously changed based on design requirements and the like.

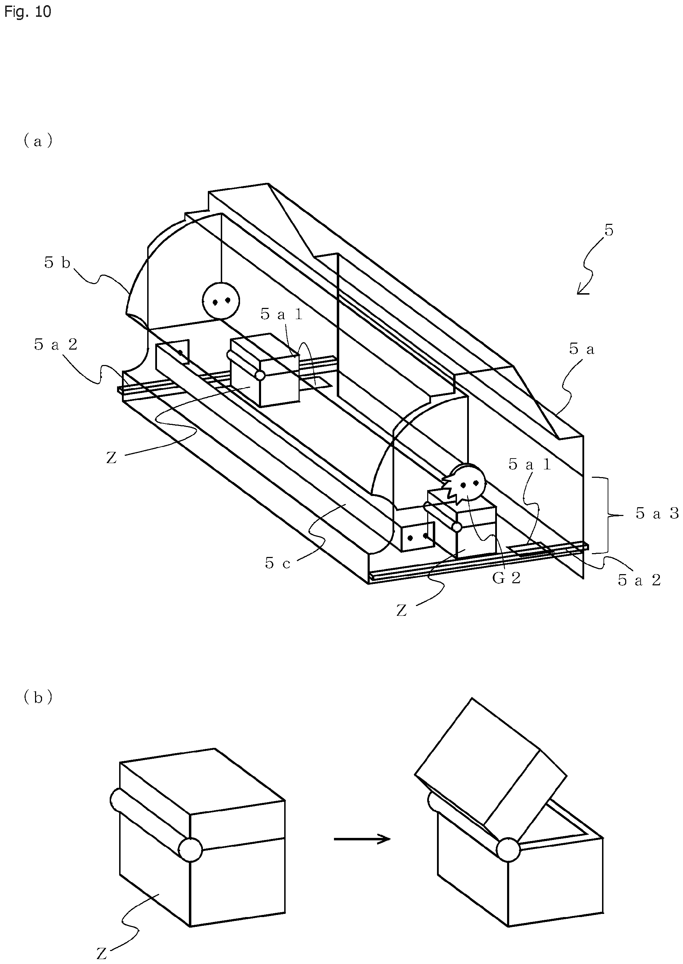

For example, as shown in Fig 10(a), a configuration may be adopted in which the medicine accommodating portion Z is provided at both ends in the left and right direction of the inside of the feces collecting portion 5.

The medicine accommodating portion Z is fixed to the bottom surface of the feces collecting portion 5, and the medicine accommodating portion Z has a substantially rectangular parallelepiped shape as shown in Fig 10(b), and the deodorant accommodating portion main body Z1 and the lid portion Z2 are hingedly connected to each other to be configured to be freely opened and closed.

Thus, the owner can store a desired agent such as a deodorant, a bactericide, an antibacterial agent, or the like in the deodorant accommodating portion main body Z1, and can keep the inside of the feces collection portion 5 odorless and clean.

The medicine accommodating portion Z does not necessarily have to be provided inside the feces collecting portion 5, and may be provided outside the feces collecting portion 5.

### Reference Signs List

- 1: Processing sheet
- 2: Pedestal
- 3: Center frame
- 4: Housing
- 5: Feces collection portion
- 6: Front frame
- 7: Motor section
- 8: Read sensor
- 9: Light emitter
- 10: Control section
- 11: Foundation
- S: Pressure sensitive sensor
- C: Connecting cable
- H: Locking hole
- P: Locking projection
- T: Through hole
- R1: Unwinding roller
- R2: Winding roller
- r1: First auxiliary roller
- r2: Second auxiliary roller
- r3: Third auxiliary roller
- B1: First bracket
- B2: Second bracket
- S1, S2: Support member
- G1, G2, G3 and G4: Gears
- Z: Medicine storage section
- D: Feces

## Claims

1. A pet toilet comprising: a strip-shaped processing sheet for processing excrement of pet; an unwinding roller for unwinding the processing sheet; a pedestal on which the processing sheet is laid; a excrement collecting unit for collecting the excrement;
wherein the excrement collecting section including: a winding roller for collecting urine; a feces collecting section for collecting feces,
wherein the internal space of the housing is provided with the unwinding roller and the winding roller,
wherein the housing including; a side wall portion erected substantially parallel to the width direction of the processing sheet and substantially perpendicular to the pedestal,
wherein the above of the side wall portion is provided with an insertion opening through which the processing sheet is inserted,
wherein the pedestal is provided adjacent to the outside of the housing,
wherein the below of the pedestal is provided with a space through which the processing sheet passes.

2. The pet toilet according to claim 1, wherein the housing including; a side wall portion erected substantially parallel to the width direction of the processing sheet and substantially perpendicular to the pedestal,
wherein the internal space of the housing is provided with a first auxiliary roller around which the processing sheet is wound,
wherein the below of the side wall portion is provided with a lower insertion port through which the processing sheet is inserted,
wherein the processing sheet is wound around the first auxiliary roller via the lower insertion port.

3. The pet toilet according to claim 2, wherein the unwinding roller is arranged above the first auxiliary roller,
wherein the winding roller is arranged behind the first auxiliary roller.

4. The pet toilet according to claim 3, wherein the below of the winding roller is provided with a second auxiliary roller around which the processing sheet is wound.

5. The pet toilet according to any one of claims 2 to 4, wherein the width direction of the pedestal and the axial direction of the first auxiliary roller are substantially parallel,
wherein the vertical distance from the lower surface of the pedestal to the upper surface of the pedestal is substantially the same as the vertical distance from the lower surface of the pedestal to the lower end of the first auxiliary roller.

6. The pet toilet according to any one of claims 1 to 5, wherein the front end of the pedestal is provided with a third auxiliary roller around which the processing sheet is wound.

7. The pet toilet according to any one of claims 1 to 6, wherein the housing is formed with an opening for taking in and out the unwinding roller and the winding roller.

8. The pet toilet according to any one of claims 1 to 7, wherein the feces collecting portion is provided with a blade in contact with the processing sheet in a width direction.

9. The pet toilet according to any one of claims 1 to 8, wherein the feces collecting portion is substantially transparent.

10. The pet toilet according to any one of claims 2 to 9, wherein the pedestal is detachable from the side wall.

11. The pet toilet according to any one of claims 1 to 10, further comprising: a pressure sensitive sensor that senses the presence or absence of excrement based on the weight of the pedestal.

12. The pet toilet according to any one of claims 1 to 11, further comprising: a reading sensor for reading the length of the processing sheet taken up by the winding roller.

13. The pet toilet according to any one of claims 1 to 12, further comprising: a notification means for reporting a replacement time of the processing sheet.

14. The pet toilet according to any one of claims 1 to 13, wherein the feces collection portion is provided with a medicine storage portion.
